# EUROPEAN PATENT APPLICATION

(11) **EP 4 773 307 A1**
(43) Date of publication of application: **08.07.2026**
(21) Application number: 26150528.3
(22) Date of filing: 07.01.2026
(51) Int. Cl.: H01M 10/0567, H01M 10/0565, H01M 10/0525, H01M 10/0569

(54) **COMPOSITE ELECTROLYTE MEMBRANE AND LITHIUM SECONDARY BATTERY INCLUDING THE SAME**

(30) Priority: 07.01.2025 KR 20250001921; 05.01.2026 KR 20260000979
(71) Applicant: SK On Co., Ltd., Seoul 03161 (KR)
(72) Inventor: PARK, Seong Jin, 34124 Daejeon (KR); HAN, Ju Sung, 34124 Daejeon (KR)
(74) Representative: Prüfer & Partner mbB Patentanwälte · Rechtsanwälte

(57) **Abstract**

Provided are a composite electrolyte membrane and a lithium secondary battery including the same. According to an aspect of the present disclosure, a composite electrolyte membrane including: a fluorine-based porous support; and a gel polymer electrolyte including a fluorine-based compound is provided.

## Description

### TECHNICAL FIELD

The following disclosure relates to a composite electrolyte membrane and a lithium secondary battery including the same.

### BACKGROUND

In recent years, as an environmentally friendly technology rapidly increases in demand, research on various energy sources has been intensively conducted. As the energy source as such, a lithium secondary battery is being used behovefully as a power supply for mobile devices such as smart phones and laptops or electric vehicles, due to its advantages of high energy density and small self-discharge.

When a general lithium secondary battery manufactured by injecting a liquid electrolyte is subjected to abnormal conditions such as penetration, impact, and pressurization or overheated, it has a safety problem such as battery explosion or fire. Thus, in order to secure safety, attempts are being made to apply a semi-solid electrolyte or a solid electrolyte instead of a liquid electrolyte.

Among them, a gel polymer electrolyte (GPE) is an electrolyte showing a semi-solid state in a gel form by containing a liquid electrolyte in a polymer solid electrolyte and has an advantage of significantly improving battery safety as compared with the liquid electrolyte, but has a problem of decreasing a capacity by increasing a resistance value as compared with the liquid electrolyte.

### SUMMARY

An embodiment of the present disclosure is directed to providing a composite electrolyte membrane having excellent ion conductivity and affinity between a support and a gel polymer electrolyte and a lithium secondary battery including the same.

Another embodiment of the present disclosure is directed to providing a composite electrolyte membrane which may improve battery resistance characteristics and capacity, and a lithium secondary battery including the same.

Another embodiment of the present disclosure is directed to providing a composite electrolyte membrane having excellent mechanical properties and flame retardancy, and a lithium secondary battery including the same.

Another embodiment of the present disclosure is directed to providing a lithium secondary battery having improved resistance characteristics and life characteristics by including the composite electrolyte membrane.

The composite electrolyte membrane and the lithium secondary battery including the same of the present disclosure may be widely applied to the green technology field such as electric vehicles, battery charging stations, and also, solar and wind power generation using the batteries. In addition, the composite electrolyte membrane and the lithium secondary battery including the same of the present disclosure may be used in eco-friendly electric vehicles, hybrid vehicles, and the like for preventing climate change by suppressing air pollution and greenhouse gas emission.

In one general aspect, a composite electrolyte membrane includes: a fluorine-based porous support; and a gel polymer electrolyte including a fluorine-based compound.

In an exemplary embodiment of the present disclosure, the gel polymer electrolyte may be impregnated in either one or both selected from a surface and a pore part of the porous support.

In an exemplary embodiment of the present disclosure, the fluorine-based porous support may include a fluorine-based polymer including a structural unit derived from one or two or more monomers selected from the group consisting of vinylidene fluoride, hexafluoropropylene, tetrafluoroethylene, chlorotrifluoroethylene, and perfluoroalkyl vinyl ether.

In an exemplary embodiment of the present disclosure, the fluorine-based porous support may have a fluorine element content having a gradient.

In an exemplary embodiment of the present disclosure, the fluorine-based porous support may include a porous film containing a first fluorine-based polymer and a second fluorine-based polymer layer in which either one or both selected from the surface and the pore part of the porous film are coated and impregnated with a second fluorine-based polymer.

In an exemplary embodiment of the present disclosure, a fluorine content in the first fluorine-based polymer may be higher than a fluorine content in the second fluorine-based polymer.

In an exemplary embodiment of the present disclosure, the gel polymer electrolyte may further include a gel polymer and a lithium salt.

In an exemplary embodiment of the present disclosure, the fluorine-based compound may be a fluorine-substituted carbonate-based compound.

In an exemplary embodiment of the present disclosure, the fluorine-substituted carbonate-based compound may be one or two or more compounds selected from the group consisting of fluoroethylene carbonate (FEC), difluoroethylene carbonate (DFEC), fluorodimethyl carbonate (FDMC), and fluoroethyl methyl carbonate (FEMC).

In an exemplary embodiment of the present disclosure, a content of the fluorine-based compound may be 5 wt% to 90 wt% based on the total weight of the gel polymer electrolyte.

In an exemplary embodiment of the present disclosure, the gel polymer may be a polymer including a structural unit derived from a polyfunctional (meth)acrylate-based monomer.

In an exemplary embodiment of the present disclosure, the polyfunctional (meth)acrylate-based monomer may be represented by the following Chemical Formula 1:

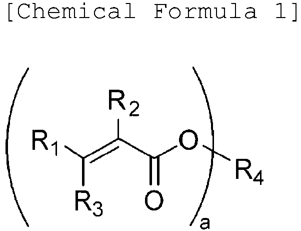

wherein R₁ to R₃ are independently of one another hydrogen, or a substituted or unsubstituted, linear or branched C1 to C6 alkyl group, R₄ is a linear or branched C1 to C10 hydrocarbon group, and a is integer of 2 to 6.

In another general aspect, a lithium secondary battery includes: a positive electrode, a negative electrode, and the above-described composite electrolyte membrane placed between the positive electrode and the negative electrode.

Other features and aspects will be apparent from the following detailed description, the drawings, and the claims.

### DETAILED DESCRIPTION OF EMBODIMENTS

The embodiments described in the present specification may be modified in many different forms, and the technology according to an exemplary embodiment is not limited to the embodiments set forth herein. In addition, the embodiments of an exemplary embodiment are provided so that the present disclosure will be described in more detail to a person with ordinary skill in the art.

In addition, the singular form used in the specification and claims appended thereto may be intended to include a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further inclusion of other constituent elements rather than exclusion of other constituent elements.

The terms such as "first" and "second" used in the present specification may be used to describe various constituent elements, but the constituent elements are not to be limited to the terms. The terms are used only to differentiate one constituent element from other constituent elements.

In order to improve the flame-retardant properties of an electrolyte and life characteristics of a battery as well as the safety of a lithium secondary battery, a gel polymer electrolyte including a fluorine-based compound is being studied. However, the gel polymer electrolyte including the fluorine-based compound has reduced affinity with a support and an increased resistance value, so that battery performance may not be sufficiently secured, and as the content of the fluorine-based compound is higher, the problem may worsen.

The composite electrolyte membrane according to an exemplary embodiment may provide a composite electrolyte membrane having excellent affinity between a support and a gel polymer electrolyte, by using a fluorine-based polymer as a support for supporting the gel polymer electrolyte.

In the present disclosure, the meaning of the porous support may be having pores, but even when the support does not have pores, may also be having a form in which lithium ions are transferred through migration.

Since the composite electrolyte membrane according to an exemplary embodiment includes both the fluorine-based porous support and the gel polymer electrolyte including a fluorine-based compound, it may suppress a resistance increase due to excellent affinity of the gel polymer electrolyte with the support and show excellent ion conductivity. Specifically, due to the high affinity, a composition for forming a gel polymer electrolyte is gelated to significantly suppress a resistance increase during formation of the gel polymer electrolyte, and thus, the composite electrolyte membrane may have excellent ion conductivity. In addition, the composite electrolyte membrane may have excellent mechanical properties and flame retardancy.

In addition, since an exemplary embodiment of the present disclosure includes the composite electrolyte membrane having excellent electrolyte affinity and ion conductivity, a lithium secondary battery having excellent resistance characteristics and life characteristics may be provided.

Hereinafter, each component of the composite electrolyte membrane according to an exemplary embodiment of the present disclosure will be described.

An exemplary embodiment provides a composite electrolyte membrane including: a fluorine-based porous support; and a gel polymer electrolyte including a fluorine-based compound.

In an exemplary embodiment, the gel polymer electrolyte may be impregnated in the porous support, and specifically, may be impregnated in either one or both selected from a surface and a pore part of the porous support.

In an exemplary embodiment, the fluorine-based polymer forming the fluorine-based porous support may be used without large limitation as long as it is a polymer including a structural unit containing one or more fluorine atoms. Since the fluorine-based porous support is used as the support of the gel polymer electrolyte including the fluorine-based compound, excellent affinity between the support and the gel polymer electrolyte may be shown.

In an exemplary embodiment, the fluorine-based porous support may include a fluorine-based polymer including a structural unit derived from one or two or more monomers selected from the group consisting of vinylidene fluoride, hexafluoropropylene, tetrafluoroethylene, chlorotrifluoroethylene, and perfluoroalkyl vinyl ether.

A non-limiting example of the fluorine-based polymer may include poly vinylidene fluoride (PVDF), polytetrafluoroethylene (PTFE), polychlorotrifluoroethylene (PCTFE), polyvinylidene fluoride-co-hexafluoropropylene copolymer (PVdF-co-HFP), tetrafluoroethylene-perfluoroalkyl vinyl ether copolymer (perfluoroalkoxy alkane, PFA), tetrafluoroethylene-hexafluoropropylene copolymer (hexafluoropropene tetrafluoroethene copolymer, FEP), ethylene-tetrafluoroethylene copolymer (ETFE), tetrafluoroethylene/chlorotrifluoroethylene (TFE/CTFE), ethylene-chlorotrifluoroethylene copolymer (ECTFE), and the like.

The porous support may include any one or a combination of two or more selected from polytetrafluoroethylene (PTFE), polyvinylidene fluoride (PVDF), and polyvinylidene fluoride-co-hexafluoropropylene copolymer (PVdF-co-HFP), as the fluorine-based polymer, without limitation.

In an exemplary embodiment, the porous support may have a porosity of 20% to 70% or 20% to 50%.

In an exemplary embodiment, the porous support may have pores, and for example, may be manufactured by applying or impregnating a fluorine-based polymer slurry on one or both surfaces of the fluorine-based porous film having a porosity of 20% to 70%. Accordingly, the fluorine element contents in the center and on the surface may be different from each other. The surface refers to a part on/in which the fluorine-based polymer slurry is applied and impregnated. That is, its meaning includes that the slurry is applied on a surface layer and also impregnated in pores under the surface layer of the fluorine-based porous film. The fluorine-based polymer slurry is applied and/or impregnated on/in one or both surfaces of the fluorine-based porous film and coated on the surface layer, and simultaneously, impregnated and coated on the pore part of the fluorine-based porous film according to a capillary phenomenon. Herein, the surface includes the impregnated part in the pore part as well as the applied part on the surface layer, and the position of the surface may vary depending on the thickness and/or the amount of the part impregnated in the pores. Accordingly, the part in which the fluorine-based polymer slurry is not impregnated may be defined as a center part.

The fluorine-based polymer slurry may include a fluorine-based polymer and a solvent. The fluorine-based polymer forming the fluorine-based porous film (first fluorine-based polymer) may have a higher fluorine content than the fluorine-based polymer included in the fluorine-based polymer slurry (second fluorine-based polymer). For example, the first fluorine-based polymer may be polytetrafluoroethylene, and the second fluorine-based polymer may be polyvinylidene fluoride-co-hexafluoropropylene (PVdF-co-HFP), but they are not limited thereto.

In an exemplary embodiment, the fluorine-based porous support may have a fluorine element content having a gradient in the thickness direction. The fluorine element content may have a continuous gradient or a stepwise gradient in the thickness direction. When the fluorine element content has the gradient as such, it is more preferred that the fluorine element content increases in the center part, since the better physical properties of the present disclosure may be achieved. The gradient of the fluorine element content in the thickness direction in the fluorine-based porous support may be imparted using affinity or repulsion with the porous film in polymer compositions having different fluorine contents from each other or may be imparted by a method of laminating or coating polymers having different fluorine contents from each other, but the present disclosure is not limited thereto.

In an exemplary embodiment, the fluorine-based porous support may include a porous film containing a first fluorine-based polymer and a second fluorine-based polymer layer in which either one or both selected from the surface and the pore part of the porous film are coated and impregnated with a second fluorine-based polymer. Accordingly, more first fluorine-based polymer is distributed in the center part of the porous support than the second fluorine-based polymer, and more second fluorine-based polymer is distributed on the surface than the first fluorine-based polymer, thereby forming the gradient of the fluorine element content between the first and second fluorine-based polymers. Specifically, the fluorine content of the first fluorine-based polymer may be higher than the fluorine content of the second fluorine-based, and thus, the gradient in which the fluorine content increases toward the center and decreases toward the surface part in the thickness direction of the porous support may be imparted.

In addition, when the porous support has a structure of porous film/polymer layer or polymer layer/porous film/polymer layer as described above, the mechanical properties of the composite electrolyte membrane are further improved, and the porous support is not damaged for a long time even during battery operation to prevent internal short circuit, thereby increasing battery safety.

In an exemplary embodiment, the gel polymer electrolyte may include a fluorine-based compound, a gel polymer, and a lithium salt.

In an exemplary embodiment, the fluorine-based compound included in the gel polymer electrolyte may be a fluorine-substituted carbonate-based compound. Since the fluorine-substituted carbonate-based compound is included with the fluorine-based porous support, affinity between the gel polymer electrolyte and the support is further improved to further suppress a resistance increase, and thus, a composite electrolyte membrane having significantly excellent ion conductivity and a lithium secondary battery having significantly excellent life characteristics may be provided.

In an exemplary embodiment, the fluorine-substituted carbonate-based compound may be one or two or more compounds selected from the group consisting of fluoroethylene carbonate (FEC), difluoroethylene carbonate (DFEC), fluorodimethyl carbonate (FDMC), and fluoroethyl methyl carbonate (FEMC).

In an exemplary embodiment, the content of the fluorine-based compound may be 3 wt% or more, 5 wt% or more, 10 wt% or more, 20 wt% or more, 30 wt% or more, 40 wt% or more, 50 wt% or more, 95 wt% or less, 90 wt% or less, 85 wt% or less, or a value between the numerical values, based on the total weight of the gel polymer electrolyte. In a exemplary embodiment, the content of the fluorine-based compound may be 3 wt% to 95 wt%, 5 wt% to 90 wt%, 10 wt% to 90 wt%, 10 wt% to 89 wt%, 20 wt% to 90 wt%, 30 wt% to 90 wt%, 40 wt% to 90 wt%, or 50 wt% to 90 wt%, based on the total weight of the gel polymer electrolyte.

In the past, when the fluorine-based compound in the range described above was used, affinity between the gel polymer electrolyte and the support was decreased and application to a lithium secondary battery was not allowed due to low ion conductivity of the electrolyte membrane. In an exemplary embodiment of the present disclosure, since the fluorine-based porous support is used, the affinity between the gel polymer electrolyte and the support is significantly improved even when the fluorine-based compound in the range described above is used, thereby implementing an electrolyte membrane having excellent ion conductivity. Specifically, the content of the fluorine-based compound may be 20 wt% or more, and even when the fluorine-based compound is included in a large amount as such, the membrane may have excellent ion conductivity, thereby allowing manufacture of a lithium secondary battery which may significantly improve battery life characteristics.

In an exemplary embodiment, the content of the gel polymer included in the gel polymer electrolyte may be included at 1 wt% to 20 wt% or 1 wt% to 10 wt%, based on the total weight of the gel polymer electrolyte, but is not limited thereto.

In an exemplary embodiment, the gel polymer may be a polymer including a structural unit derived from a polyfunctional (meth)acrylate-based monomer. The polyfunctional (meth)acrylate-based monomer may include 2 to 6, 2 to 4, or 2 or 3 functional groups.

In an exemplary embodiment, the polyfunctional (meth)acrylate-based monomer may be represented by the following Chemical Formula 1:

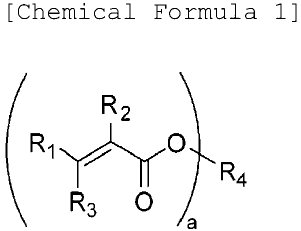

wherein R₁ to R₃ are independently of one another hydrogen, or a substituted or unsubstituted, linear or branched C1 to C6 alkyl group, and R₄ is a linear or branched C1 to C10 hydrocarbon group, and a is integer of 2 to 6.

In Chemical Formula 1, the substituted or unsubstituted, linear or branched C1 to C6 alkyl group of R₁ to R₃ may be a substituted or unsubstituted, linear or branched C1 to C4 alkyl group, a substituted or unsubstituted, linear or branched C1 to C3 alkyl group, a substituted or unsubstituted methyl group, or a substituted or unsubstituted ethyl group.

In Chemical Formula 1, R₁ to R₃ may be independently of one another hydrogen, or a substituted or unsubstituted, linear or branched C1 to C3 alkyl group.

In Chemical Formula 1, R₁ to R₃ may be independently of one another hydrogen, a substituted or unsubstituted methyl group, or a substituted or unsubstituted ethyl group.

In Chemical Formula 1, R₁ and R₃ may be hydrogen, and R₂ may be a substituted or unsubstituted, linear or branched C1 to C6 alkyl group.

In Chemical Formula 1, R₁ and R₃ may be hydrogen, and R₂ may be a substituted or unsubstituted, linear or branched C1 to C3 alkyl group.

In Chemical Formula 1, R₁ and R₃ may be hydrogen, and R₂ may be a substituted or unsubstituted methyl group or a substituted or unsubstituted ethyl group.

In Chemical Formula 1, R₄ may be a linear or branched C1 to C10 hydrocarbon group, a linear or branched C2 to C9 hydrocarbon group, a linear or branched C3 to C8 hydrocarbon group, a linear or branched C4 to C7 hydrocarbon group, or a linear or branched C5 or C6 hydrocarbon group.

In Chemical Formula 1, a may be 2 to 6, specifically 2 or 3.

An example of the polyfunctional (meth)acrylate-based monomer may include trimethylolpropane tri(meth)acrylate, pentaerythritol tri(meth)acrylate, and tris(acryloyloxyethyl) isocyanurate, but is not limited thereto.

In an exemplary embodiment, the lithium salt acts as a source of a lithium ion in the battery to allow basic operation of a lithium secondary battery and may promote lithium ion movement between a positive electrode and a negative electrode. A non-limiting example of the lithium salt may include LiPF₆, LiBF₄, LiSbF₆, LiAsF₆, LiN(SO₃C₂F₅)₂, LiN(CF₃SO₂)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCl, LiI, LiB(C₂O₄)₂, or a combination thereof, but is not limited thereto. The concentration of the lithium salt may be in a range of 0.1 M to 5.0 M or 0.1 M to 2.0 M.

In an exemplary embodiment, the gel polymer electrolyte may further include an organic solvent. The organic solvent may include carbonate-based, ester-based, ether-based, ketone-based, alcohol-based, or aprotic solvents, the solvent may be used alone or in combination of two or more, and a mixing ratio in the case of using a mixture of two or more may be appropriately adjusted depending on the desired battery performance. As an example, two or more selected from the group consisting of ethylene carbonate (EC), propylene carbonate (PC), diethyl carbonate (DEC), dimethyl carbonate (DMC), ethyl methyl carbonate (EMC), dipropyl carbonate (DPC), methyl propyl carbonate (MPC), ethyl propyl carbonate (EPC), and butylene carbonate (BC) may be selected and used. In addition, a solvent known in the art may be used, but is not limited thereto.

In another exemplary embodiment, the gel polymer electrolyte may not include the organic solvent as described above, and thus, the composite electrolyte membrane according to an exemplary embodiment significantly suppresses the increase in resistance even with the inclusion of a higher content of the fluorine-based compound, thereby providing a battery having significantly improved resistance characteristics and life characteristics.

In an exemplary embodiment, the composite electrolyte membrane may have an ion conductivity of 1 x 10⁻⁴ S/cm or more, 5 x 10⁻⁴ S/cm or more, 1 x 10⁻³ S/cm or more, 1 x 10⁻² S/cm or more, or a value between the numerical values. In a specific exemplary embodiment, the ion conductivity of the composite electrolyte membrane may be 1 x 10⁻⁴ S/cm to 1 x 10⁻² S/cm, 5 x 10⁻⁴ S/cm to 1 x 10⁻² S/cm, or 1 x 10⁻³ S/cm to 1 x 10⁻² S/cm. Herein, the ion conductivity may be calculated by measuring resistance by electrochemical impedance spectroscopy (EIS) at 25°C and then converting the value into the thickness and the area of the composite electrolyte membrane. The composite electrolyte membrane according to an exemplary embodiment has excellent affinity of the gel polymer electrolyte with the support even when a large amount of the fluorine-based compound is included, thereby suppressing a resistance increase and satisfying the ion conductivity in the range described above. Accordingly, a lithium secondary battery having significantly improved life characteristics may be provided.

In an exemplary embodiment, the composite electrolyte membrane may have a thickness of 1 µm to 500 µm, 1 µm to 300 µm, 1 µm to 200 µm, 5 µm to 100 µm, or 5 µm to 50 µm, but is not limited thereto.

In an exemplary embodiment, a weight ratio between the porous support and the gel polymer electrolyte may be 10:1 to 1:1 or 4:1 to 1:1, but is not limited thereto.

Hereinafter, a method for manufacturing a composite electrolyte membrane according to an exemplary embodiment will be described.

The present disclosure provides a method for manufacturing a composite electrolyte membrane including: preparing a fluorine-based porous support; and impregnating the porous support with a composition for forming a gel polymer electrolyte including a fluorine-based compound, a gel polymer monomer, an initiator, and a lithium salt.

Since the fluorine-based polymer, the porous support, the fluorine-based compound, and the lithium salt are as described above, detailed description thereof will be omitted.

The step of preparing a porous support may be a step of applying a second fluorine-based polymer slurry on one or both surfaces of a porous film containing a first fluorine-based polymer. The application may use a commonly used or known coating or application method without large limitation, and as an example, may use a method such as spin coating, dip coating, inkjet printing, spray coating, screen printing, drop casting, or a doctor blade coating. As another example, the porous support may be manufactured by bringing a releasing film on which the second fluorine-based polymer slurry is applied with the porous film. In addition, an application amount may be easily adjusted depending on the thickness of the porous support layer to be manufactured.

The step of preparing the porous support may further include drying after applying the second fluorine-based polymer slurry, and the drying temperature may be 0°C to 80°C or 10°C to 50°C, without limitation.

The step of impregnating the porous support with the composition for forming a gel polymer electrolyte may be performed by using a method used in the same technical field without limitation. As a non-limiting example, the composite electrolyte membrane may be manufactured by injecting a composition for forming a gel polymer electrolyte including a fluorine-based compound, a gel polymer monomer, and initiator, and a lithium salt into a porous support and then curing the composition. The curing temperature may be 40°C to 150°C or 50°C to 100°C.

In an exemplary embodiment, the composition for forming a gel polymer electrolyte may further include an organic solvent. The organic solvent may include carbonate-based, ester-based, ether-based, ketone-based, alcohol-based, or aprotic solvents, the solvent may be used alone or in combination of two or more, and a mixing ratio in the case of using a mixture of two or more may be appropriately adjusted depending on the desired battery performance. As an example, two or more selected from the group consisting of ethylene carbonate (EC), propylene carbonate (PC), diethyl carbonate (DEC), dimethyl carbonate (DMC), ethyl methyl carbonate (EMC), dipropyl carbonate (DPC), methyl propyl carbonate (MPC), ethyl propyl carbonate (EPC), and butylene carbonate (BC) may be selected and used. In addition, a solvent known in the art may be used, but is not limited thereto.

In another exemplary embodiment, the composition for forming a gel polymer electrolyte may not include the organic solvent as described above, and thus, the composite electrolyte membrane according to an exemplary embodiment significantly suppresses the increase in resistance even with the inclusion of a higher content of the fluorine-based compound, thereby providing a battery having significantly improved resistance characteristics and life characteristics.

In an exemplary embodiment, the gel polymer monomer may be a common or known monomer used in the art without limitation, and for example, may be a polyfunctional (meth)acrylate-based monomer. The polyfunctional (meth)acrylate-based monomer may be represented by Chemical Formula 1.

In an exemplary embodiment, the initiator may be a common or known polymerization initiator used in the art without limitation. An example of the polymerization initiator may be one or more selected from the group consisting of a peroxy-based initiator and an azo-based initiator. Specifically, the peroxy-based initiator may include t-butyl peroxy pyvalate, 1-cyclohexyl-1-methylethyl peoxy-2-ethyl hexanoate, t-butyl peroxy isopropyl monocarbonate, t-butyl triallylsilyl peroxide, and the like. A specific example of the azo-based initiator may be 2,2'-azobis(4-methoxy-2,4-dimethyl valeronitrile), dimethyl 2,2'-azobis(2-methyl propionate), 2,2'-azobis(N-cyclohexyl-2-methyl propionate), and the like.

In addition, the present disclosure may provide a lithium secondary battery including a positive electrode, a negative electrode, and the composite electrolyte membrane as described above, placed between the positive electrode and the negative electrode. Herein, the positive electrode and the negative electrode may be used without limitation as long as they are commonly used in the lithium secondary battery. A non-limiting example thereof may include a lithium metal battery using a negative electrode including a lithium metal.

### [Positive electrode]

A positive electrode may include a positive electrode current collector and a positive electrode mixture layer placed on at least one surface of the positive electrode current collector.

### (Positive electrode current collector)

The positive electrode current collector may include stainless steel, nickel, aluminum, titanium, or an alloy thereof. The positive electrode current collector may also include aluminum or stainless steel which is surface-treated with silver, carbon, nickel, or titanium. Though thickness of the positive electrode current collector is not limited thereto, it may be 10 to 50 µm.

### (Positive electrode material)

A positive electrode mixture layer may include a positive electrode active material. The positive electrode active material may include a compound which may reversibly intercalate and deintercalate lithium ions.

According to the illustrative examples, the positive electrode active material may include a lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may include a layered structure or a crystal structure represented by the following Chemical Formula A:

[Chemical Formula A] LiₓNiₐM_{b}O_{2+z}

wherein 0.9≤x≤1.2, 0.6≤a≤0.99, 0.01≤b≤0.4, and - 0.5≤z≤0.1. As described above, M may include Co, Mn, and/or Al.

The chemical structure represented by Chemical Formula A shows a bonding relationship included in the layered structure or the crystal structure of the positive electrode active material, but other additional elements are not excluded. For example, M includes Co and/or Mn, and Co and/or Mn may be provided as a main active element of the positive electrode active material with Ni. Chemical Formula A is provided for expressing the bonding relationship of the main active elements and should be understood as a formula covering introduction of or substitution with an additional element.

In an exemplary embodiment, auxiliary elements which are added to the main active elements to enhance chemical stability of the positive electrode active material, or the layered structure/crystal structure may be further included. The auxiliary element may be incorporated into the layered structure/crystal structure to form a bond, and in this case also, should be understood to be included in the range of the chemical structure represented by Chemical Formula A.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 1-1:

[Chemical Formula 1-1] LiₓNiₐM1_{b1}M2_{b2}O_{2+z}

wherein M1 includes Co, Mn, and/or Al; M2 includes the auxiliary elements described above; and 0.9≤x≤1.2, 0.6≤a≤0.99, 0.01≤b1+b2≤0.4, and -0.5≤z≤0.1.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles or may penetrate through the surface of the lithium-nickel metal oxide particles and be included in the bond structure represented by Chemical Formula A or Chemical Formula 1-1.

The positive electrode active material may include a nickel-cobalt-manganese (NCM)-based lithium oxide. In this case, an NCM-based lithium oxide having an increased nickel content may be used.

Ni may be provided as a transition metal related to the output and capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to illustrative examples, the life stability and the capacity retention properties may be improved by Mn, while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, LiFePO₄).

In some exemplary embodiments, the positive electrode active material may include a Mn-rich-based active material having a chemical structure or crystal structure represented by Chemical Formula 2, a Li rich layered oxide (LLO)/over lithiated oxide (OLO)-based active material, or a Co-less-based active material:

[Chemical Formula 2] p[Li₂MnO₃] · (1-p)[Li_{q}JO₂]

wherein 0<p<1 and 0.9≤q≤1.2, and J may include at least one element of Mn, Ni, Co, Fe, Cr, V, Cu, Zn, Ti, Al, Mg, and B.

### (Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further include a binder, and may optionally further include a conductive material, a thickener, and the like.

### (Positive electrode solvent)

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, and the like.

### (Positive electrode binder)

The binder may include polyvinylidene fluoride (PVDF), poly(vinylidene fluoride-co-hexafluoropropylene, polyacrylonitrile, polymethyl methacrylate, acrylonitrile butadiene rubber (NBR), polybutadiene rubber (BR), styrenebutadiene rubber (SBR), and the like. In an exemplary embodiment, a PVDF-based binder may be used as a positive electrode binder.

### (Positive electrode conductive material)

The conductive material may be added for increasing conductivity of the positive electrode mixture layer and/or mobility of lithium ions or electrons. For example, the conductive material may include carbon-based conductive materials such as graphite, carbon black, acetylene black, ketjen black, graphene, carbon nanotubes, vapor-grown carbon fiber (VGCF), and carbon fiber, and/or metal-based conductive materials including tin, tin oxide, titanium oxide, perovskite materials such as LaSrCoO₃ and LaSrMnO₃, and the like, but is not limited thereto.

### (Positive electrode thickener/ dispersant)

If necessary, the positive electrode mixture may further include a thickener and/or a dispersant and the like. As an exemplary embodiment, the positive electrode mixture may include a thickener such as carboxymethyl cellulose (CMC).

### [Negative electrode]

A negative electrode may use a lithium foil or a lithium powder as it is or may include a lithium negative electrode having the lithium foil or lithium powder placed on a negative electrode current collector; or a non-negative electrode composed only a negative electrode current collector without an active material.

### (Negative electrode current collector)

A non-limiting example of the negative electrode current collector may include a copper foil, a nickel foil, a stainless-steel foil, a titanium foil, a nickel foam, a copper foam, a polymer substrate coated with a conductive metal, and the like. The thickness of the negative electrode current collector is not limited, but may be, for example, 2 to 50 µm.

### (Lithium foil)

A lithium foil is formed in a thin foil-shaped plate body, and its thickness may be, for example, 1 to 50 µm.

The negative electrode may be composed of, for example, the lithium foil alone or may be obtained by pressing the lithium foil on the negative electrode current collector and integrating them.

### (Lithium powder)

A lithium powder may be particles having an average particle diameter of 1 to 250 µm, but is not limited thereto.

The negative electrode may be manufactured, for example, by using the lithium powder alone or by preparing a slurry using only the lithium powder and then coating the negative electrode current collector with the slurry and then rolling it.

In addition, a binder may be further included with the lithium powder. For example, the lithium powder and a binder may be used to manufacture a negative electrode, or a composition including the lithium powder and the binder may be applied onto the negative electrode current collector and compressed to integrate them.

When the lithium powder and the binder are included, a weight ratio between the lithium powder and the binder may be 90:10 to 99.5:0.5.

The binder is not limited as long as it may bind the lithium powder, and for example, may be a styrene butadiene rubber, nitrile butadiene rubber, a methyl acrylate butadiene rubber, and the like, but is not limited thereto.

### [Separator]

A separator may be interposed between the positive electrode and the negative electrode. The separator may be formed so that electrical short circuit between the positive electrode and the negative electrode is prevented, and an ion flow occurs. According to an exemplary embodiment, the thickness of the separator may be 10 µm to 20 µm, but the present disclosure is not limited thereto.

In addition, according to an exemplary embodiment, the separator is composed of the composite electrolyte membrane according to an exemplary embodiment of the present disclosure. The lithium secondary battery according to an exemplary embodiment may have excellent resistance characteristics and life characteristics by including the composite electrolyte membrane having excellent electrolyte affinity and ion conductivity as described above.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

### [Method for evaluating physical properties]

### 1. Measurement of initial overvoltage (V)

Overvoltage occurring when the batteries manufactured in the examples and the comparative examples were charged while flowing a constant current of 0.4 mA/cm² at 30°C for 10 hours was measured, and its absolute value was calculated.

### 2. Measurement of capacity retention rate (%)

A capacity retention rate (%) after charge/discharge, which is expressed as a ratio (%) of a discharge capacity after repeating charge/discharge of 50 cycles under the conditions of 0.5 C charge/ 1.0 C discharge to an initial discharge capacity was measured.

### 3. Method for checking fluorine content

The fluorine contents in the first fluorine-based polymer and the second fluorine-based polymer were analyzed by X-ray Photoelectron Spectroscopy (XPS).

### <Example 1>

A fluorine-based polymer P (VdF-co-HFP) (HFP 15 wt%) was dissolved in a tetrahydrofuran (THF) solvent at a concentration of 10 wt%, and then the solution was stirred/ball milled to prepare a fluorine-based polymer slurry. Two releasing films coated with the fluorine-based polymer slurry were manufactured, and then expanded polytetrafluoroethylene (ePTFE, porosity: 70%, thickness: 10 µm) as a fluorine-based porous film was placed between the two releasing films coated with the slurry. The product was allowed to stand at room temperature for 60 minutes to allow application and impregnation of the fluorine-based polymer slurry on/in the fluorine-based porous film through a capillary phenomenon, thereby manufacturing a porous support (porosity: 40%, thickness: 20 µm).

1 M LiPF₆ was dissolved in a solvent in which fluoroethyl methyl carbonate (FEMC) and fluoroethylene carbonate (FEC) were mixed at a volume ratio of 4:1 to prepare an electrolyte solution including 70 wt% of FEMC and 19 wt% of FEC. 95 wt% of the electrolyte solution, 4.95 wt% of a gel polymer monomer (trimethylolpropane trimethacrylate, TMPETA), and 0.05 wt% of an initiator (t-butylperoxypivalate, t-BPP) were mixed to prepare a composition for forming a gel polymer electrolyte.

A laminate manufactured having a configuration of lithium negative electrode/ porous support manufactured above/ LiNi_{0.8}Mn_{0.1}Co_{0.1}O₂ positive electrode was impregnated with a composition for forming a gel polymer electrolyte, and then thermally polymerized at 70°C for 1 hour to manufacture a battery composed of negative electrode/ composite electrolyte membrane/ positive electrode by gel polymerization.

For the positive electrode, LiNi_{0.8}Mn_{0.1}Co_{0.1}O₂ powder as a positive electrode active material and a carbon conducting material (Super-P; Timcal Ltd.) were uniformly mixed at a weight ratio of 90:5, and then a polyvinylidene fluoride (PVDF) binder solution was added to prepare a slurry for forming a positive electrode active material layer so that the weight ratio of positive electrode active material: carbon-based conducting material: binder was 90:5:5. An aluminum substrate which was a positive current collector having a thickness of 12 µm was coated with the prepared slurry, dried under reduced pressure at 120°C, and then rolled with a roll press to make a sheet form, thereby manufacturing a positive electrode having a positive electrode current collector and a positive electrode active material layer.

As the lithium negative electrode, a lithium metal negative electrode in which a lithium metal having a thickness of 20 µm was laminated on a copper foil having a thickness of 6 µm was used.

The physical properties of the manufactured battery were measured and are shown in the following Table 1.

### <Example 2>

A battery was manufactured in the same manner as in Example 1, except that an electrolyte solution including 5 wt% of fluoroethylene carbonate (FEC) and 5 wt% of fluoroethyl methyl carbonate (FEMC) by dissolving 1 M LiPF₆ in a solvent in which ethylene carbonate (EC)/ ethyl methyl carbonate (EMC) were mixed at a volume ratio of 1:3 and further adding FEC and FEMC was used, instead of the electrolyte solution used in Example 1.

A fluorine-based polymer P (VdF-co-HFP) (HFP 15 wt%) was dissolved in a tetrahydrofuran (THF) solvent at a concentration of 10 wt%, and then the solution was stirred/ball milled to prepare a fluorine-based polymer slurry. Two releasing films coated with the fluorine-based polymer slurry were manufactured, and then expanded polytetrafluoroethylene (ePTFE, porosity: 70%, thickness: 10 µm) as a fluorine-based porous film was placed between the two releasing films coated with the slurry. The product was allowed to stand at room temperature for 60 minutes to allow application and impregnation of the fluorine-based polymer slurry into the fluorine-based porous film through a capillary phenomenon, thereby manufacturing a porous support (porosity: 40%, thickness: 20 µm).

1 M LiPF₆ was dissolved in a solvent in which EC/EMC were mixed at a volume ratio of 1:3, and FEC and FEMC were further added to prepare an electrolyte solution including 5 wt% of FEC and 5 wt% of FEMC. 95 wt% of the electrolyte solution, 4.95 wt% of a gel polymer monomer (trimethylolpropane trimethacrylate, TMPETA), and 0.05 wt% of an initiator (t-butylperoxypivalate, t-BPP) were mixed to prepare a composition for forming a gel polymer electrolyte.

A laminate manufactured having a configuration of lithium negative electrode/ porous support manufactured above/ LiNi_{0.8}Mn_{0.1}Co_{0.1}O₂ positive electrode was impregnated with a composition for forming a gel polymer electrolyte, and then thermally polymerized at 70°C for 1 hour to manufacture a battery composed of negative electrode/ composite electrolyte membrane/ positive electrode by gel polymerization. The physical properties of the manufactured battery were measured and are shown in the following Table 1.

### <Example 3>

A battery was manufactured in the same manner as in Example 1, except that an electrolyte solution including 25 wt% of fluoroethylene carbonate (FEC) and 25 wt% of fluoroethyl methyl carbonate (FEMC) by dissolving 1 M LiPF₆ in a solvent in which ethylene carbonate (EC)/ ethyl methyl carbonate (EMC) were mixed at a volume ratio of 1:3 and further adding FEC and FEMC was used, instead of the electrolyte solution used in Example 1. The physical properties of the manufactured battery were measured and are shown in the following Table 1.

### <Example 4>

A battery was manufactured in the same manner as in Example 1, except that an electrolyte solution including 35 wt% of fluoroethylene carbonate (FEC) and 35 wt% of fluoroethyl methyl carbonate (FEMC) by dissolving 1 M LiPF₆ in a solvent in which ethylene carbonate (EC)/ ethyl methyl carbonate (EMC) were mixed at a volume ratio of 1:3 and further adding FEC and FEMC was used, instead of the electrolyte solution used in Example 1. The physical properties of the manufactured battery were measured, and are shown in the following Table 1.

### <Comparative Example 1>

A battery was manufactured in the same manner as in Example 1, except that a porous polyethylene-based film (SK IE Technology, porosity: 49%, thickness: 13 µm) was used instead of the porous support used in Example 1.

### <Comparative Example 2>

A battery was manufactured in the same manner as in Example 2, except that a porous polyethylene-based film (SK IE Technology, porosity: 49%, thickness: 13 µm) was used instead of the porous support used in Example 2.

### <Comparative Example 3>

A battery was manufactured in the same manner as in Example 1, except that an electrolyte solution prepared by dissolving 1M LiPF₆ in a solvent in which EC/EMC were mixed at a volume ratio of 1:3 was used instead of the electrolyte solution used in Example 1.

The initial overvoltage (V) and the capacity retention rate (%) of the batteries manufactured in the examples and the comparative examples were measured as described above, and are shown in the following Table 1:

**[Table 1]**

| | Initial overvoltage (V) | Capacity retention rate (%) |
|---|---|---|
| Example 1 | 3.75 | 95.5 |
| Example 2 | 3.72 | 85.4 |
| Example 3 | 3.73 | 87.2 |
| Example 4 | 3.74 | 90.6 |
| Comparative Example 1 | 3.95 | 22.5 |
| Comparative Example 2 | 3.83 | 47.5 |
| Comparative Example 3 | 3.78 | 45.2 |

As shown in Examples 1 to 4 of Table 1, the battery manufactured according to an exemplary embodiment of the present disclosure showed excellent performance with a low initial overvoltage of 3.75 V or less and a capacity retention rate of 85.4% to 95.5%, respectively. Since the porous support and the gel polymer electrolyte included a fluorine-based component, affinity between the support and the gel polymer electrolyte and ion conductivity were excellent, and thus, improved resistance characteristics and capacity of the battery were confirmed.

Among them, the battery of Example 1 in which the gel polymer electrolyte contained a large amount of the fluorine-based polymer showed a higher capacity retention rate than the batteries of Examples 2 to 4, and thus, it was confirmed that a battery having excellent performance while significantly improving service life with high mechanical properties was implemented.

The batteries of Comparative Examples 1 and 2 manufactured using the polyethylene porous film as the porous film of the porous support showed high initial overvoltage values of 3.95 V and 3.83 V, respectively. Even the batteries of Comparative Examples 1 and 2 had very low capacity retention rates of 22.5% and 47.5%, and thus, it was confirmed that the capacity characteristics and battery life were significantly poorer than those of Examples 1 and 2.

The battery of Comparative Example 3 in which the gel polymer electrolyte did not contain the fluorine-based polymer also had a very low capacity retention rate of 45.2%, and thus, both the life characteristics and the capacity characteristics of the battery were not able to be improved.

The composite electrolyte membrane according to the present disclosure may have excellent ion conductivity and affinity between a support and a gel polymer electrolyte.

In addition, the present disclosure may provide a composite electrolyte membrane which may improve resistance characteristics and capacity of a battery.

In addition, the present disclosure may provide a composite electrolyte membrane having excellent mechanical properties and flame retardancy.

In addition, the present disclosure may provide a lithium secondary battery having excellent resistance characteristics and life characteristics by including the composite electrolyte membrane according to an exemplary embodiment.

The above description is only an example to which the principle of the present disclosure is applied, and other constitutions may be further included without departing from the scope of the present disclosure.

## Claims

1. A composite electrolyte membrane comprising:
a fluorine-based porous support; and
a gel polymer electrolyte including a fluorine-based compound.

2. The composite electrolyte membrane of claim 1, wherein the gel polymer electrolyte is impregnated in either one or both selected from a surface and a pore part of the porous support.

3. The composite electrolyte membrane of claim 1 or 2, wherein the fluorine-based porous support includes a fluorine-based polymer including a structural unit derived from one or two or more monomers selected from the group consisting of vinylidene fluoride, hexafluoropropylene, tetrafluoroethylene, chlorotrifluoroethylene, and perfluoroalkyl vinyl ether.

4. The composite electrolyte membrane of any one of claims 1 to 3, wherein the fluorine-based porous support has a fluorine element content having a gradient in the thickness direction.

5. The composite electrolyte membrane of any one of claims 1 to 4, wherein the fluorine-based porous support includes a porous film containing a first fluorine-based polymer and a second fluorine-based polymer layer in which either one or both selected from the surface and the pore part of the porous film is coated and impregnated with a second fluorine-based polymer.

6. The composite electrolyte membrane of claim 5, wherein a fluorine content in the first fluorine-based polymer is higher than a fluorine content in the second fluorine-based polymer.

7. The composite electrolyte membrane of any one of claims 1 to 6, wherein the gel polymer electrolyte further includes a gel polymer and a lithium salt.

8. The composite electrolyte membrane of any one of claims 1 to 6, wherein the fluorine-based compound is a fluorine-substituted carbonate-based compound.

9. The composite electrolyte membrane of claim 8, wherein the fluorine-substituted carbonate-based compound is one or two or more compounds selected from the group consisting of fluoroethylene carbonate (FEC), difluoroethylene carbonate (DFEC), fluorodimethyl carbonate (FDMC), and fluoroethyl methyl carbonate (FEMC).

10. The composite electrolyte membrane of any one of claims 1 to 9, wherein a content of the fluorine-based compound is 5 to 90 wt% based on the total weight of the gel polymer electrolyte.

11. The composite electrolyte membrane of claim 7, wherein the gel polymer is a polymer including a structural unit derived from a polyfunctional (meth)acrylate-based monomer.

12. The composite electrolyte membrane of claim 11, wherein the polyfunctional (meth)acrylate-based monomer is represented by the following Chemical Formula 1: 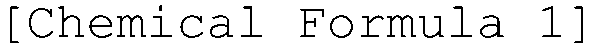 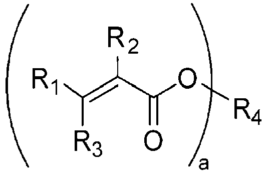 wherein R₁ to R₃ are independently of one another hydrogen, or a substituted or unsubstituted, linear or branched C1 to C6 alkyl group, R₄ is a linear or branched C1 to C10 hydrocarbon group, and a is integer of 2 to 6.

13. A lithium secondary battery comprising a positive electrode, a negative electrode, and the composite electrolyte membrane of any one claims 1 to 12 placed between the positive electrode and the negative electrode.
